# EUROPEAN PATENT APPLICATION

(11) **EP 0 704 157 A1**
(43) Date of publication of application: **03.04.1996**
(21) Application number: 95306797.2
(22) Date of filing: 26.09.1995
(51) Int. Cl.: A01M 7/00

(54) **Spraying system**

(30) Priority: 27.09.1994 GB 9419552
(71) Applicant: Somerset Fruit Machinery Limited, Martock, Somerset TA12 6HB (GB)
(72) Inventor: Screen, Nigel David, Droveway, S. Petherton TA13 5DA (GB)
(74) Representative: Stuart, Ian Alexander

(57) **Abstract**

Spraying apparatus employs hydraulic nozzles (10,56) for creating a spray, and air knives (12,57) for creating air blankets which convey, direct and contain the spray. There may be modular units each having a row of nozzles between a pair of knives whose blankets converge at a shallow angle on the spray. Units may be arranged to mimic the shape of plants to be treated. Thus a planar array for passage along a row of fruit bushes may have horizontal units (60) extending over the top, upper units (62) extending downwardly and outwardly, and lower units (64) extending downwardly and inwardly.

## Description

The present invention relates to a method and apparatus for use in spraying. It is particularly, but not exclusively, concerned with crop spraying. In that area , it is mainly concerned with the treatment of plants which are grown in rows (e.g. potatoes, strawberries and flowers) and/or as separate individuals (e.g. fruit bushes and trees) rather than as densely packed large areas (e.g. many cereals).

Much of western agriculture relies heavily on the treatment of crops with sprays. Clearly it is desirable, for both economic and environmental reasons, that sprayed substances should reach their targets (and reach all intended parts of a target plant), without substantial amounts escaping to the surroundings or passing into the soil. Surprisingly the technology is still far from perfect. A recent approach is illustrated by US-A-4,893,755 and US-A-5,002,227. These both disclose tunnel assemblies for mounting to tractors. A tunnel body is open at the bottom and the ends and is of some length. Thus it can be moved along a row of plants, enclosing a length of it. Spray devices within the body provide spray treatment conditions therein. There may be an air curtain at each end of the body, to restrain the escape of spray. Such devices are intrinsically bulky and elaborate. Carrying a treatment hangar around the farm may perhaps be feasible in some North American agricultural settings, with vast uniform fields of crops. But it is very expensive. It is also rather inflexible (though US-A-4,893,755 does suggest that the halves of the body may articulate to change the body size somewhat). It would be virtually inconceivable to provide such a device for treating a multiplicity of rows simultaneously. The devices do little for accurate targeting of spray and protecting the soil.

The devices that are commonly used are termed "mist sprayers". True to the name, such devices produce a mist, much of which drifts widely and uncontrollably. A conventional spray head has a liquid spray nozzle coaxially surrounded by an air nozzle. A very strong air blast is used, e.g. with an air speed of 100-150 m/sec, to break up the liquid into droplets and propel it forwardly. This requires a lot of power. Furthermore the spray has a 'dead' centre, due to the liquid nozzle obstructing the air flow.

Broadly, the present invention concerns spraying apparatus having at least one air knife, adapted to produce a curtain of air, and at least one liquid nozzle, arranged so that the liquid spray is conveyed and controlled by the air blanket. Generally each liquid nozzle will be closely adjacent an air knife so that the air curtain controls the liquid. The air speed may be 8-15 m/sec. The (or each) liquid nozzle may be a hydraulic nozzle, typically operating at a pressure of 3-6 bar (3-6 X 10⁵Nm⁻).

Generally, a liquid nozzle and an adjacent air knife have their axes at slight angles, so that the liquid spray tends to collide with the air curtain and be carried with it. The angle may be such that collision occurs 200-400mm, preferable 200-300mm, from the liquid spray nozzle. This can easily be arranged to provide a controlled, localised spray for a range of 1-1.5m.

An array of 30 hydraulic nozzles can be operated with a power requirement of 1-2Kw, whereas 30 air shear mist nozzles (such as are commonly used on mist sprayers) would typically require 20-30 Kw. This high power blast is very difficult to control, particularly as regards droplet size distribution and localisation of the spray. An array embodying the invention may require similar power (20-30Kw) for the air knives, but this is for targeting and drift control, not for production of droplets.

Generally the apparatus is adapted to be moved relative to the crop to be sprayed, e.g. along a row of a row crop. The amount of air required is affected by the forward speed. It should be sufficient to displace the air within the crop. Of course the denseness of the crop's foliage is also relevant. A crop like strawberries requires relatively little air; and by keeping the air speed and volume down, the risk of damage to the fragile crop is minimised.

In a preferred type of embodiment, the present invention provides spraying apparatus comprising at least one spraying unit having a plurality of spray nozzles arranged in a line, and a pair of air knives located adjacent the nozzles, one on each side of the line. Generally the air knives will extend for the full length of the line of nozzles and usually also for some distance beyond each end nozzle. The knives will be quite closely spaced, e.g. with less than 20cm between their air outlets. They are arranged to direct air curtains forwardly, i.e. having at least substantial components parallel to the axial directions of the nozzles. The arrangement is such that the knives provide air curtains that contain the spray from the nozzles. They may be angled slightly to achieve particular effects. They may enable spray droplets to be delivered as a narrow band, with a consistent velocity, and with a droplet spectrum that is quite narrow and well-controlled. The two knives provide an air shield that can control drifting even in windy conditions. They can provide turbulence which can be useful both in increasing uniformity of drop size and in getting spray to all parts of the target.

A typical air knife is a longitudinal tube, having means for connection to an air source, with a longitudinal opening. There may be a pair of flanges, projecting outwardly at respective sides of the opening, arranged to control out- flowing air. Connection of a pair of knives to a source is preferably via a flexible tube.

A spraying apparatus unit as described will generally be quite small, e.g. using air knives less than a metre long, e.g. 40-60cm. This means that the air knives can be of quite uniform effectiveness along their lengths. Also it means that a unit is quite manoeuvrable and it is easy to provide an assembly of several such units, adapted to particular circumstances, e.g. to mimic the profile of whatever is to be treated, e.g. a bush.

A simpler, potentially cheaper, type of spraying unit uses only a single air knife to control a liquid spray nozzle. Generally the air knife and the liquid nozzle will be relatively angled, so that the liquid spray collides with the air curtain at a shallow angle, and is carried along by it. There may be a liquid nozzle on each side of a knife.

An apparatus for spraying a row crop of small height may comprise a manifold arm for extending horizontally across a plurality of rows and, above each intended row location, a pair of units each mounted horizontally, transversely to the arm, so as to extend in parallel with the row direction; the units of a pair being spaced apart and oriented so that their sprays commence on respective sides of a row centre and extend downwardly and slightly inwardly, to target the particular row.
Alternatively, for each intended row, there may be a line of nozzles located centrally over an intended row centre, flanked by a pair of knives arranged to produced blankets delimiting a row. The knife at one side of a row may be adjacent a knife of the next row, but angled so that their blankets diverge. The positions and angles of the units on the manifold arm are preferably variable.

An apparatus for a bush fruit crop may use a plurality of units at at least one side of a bush arranged in a vertical plane and oriented to correspond to the outline of the bush, so that most nozzles are at similar distances from it. There may be a top unit extending horizontally over the bush in said vertical plane. At the bottom, there may be a unit arranged with its axis horizontal, not only for spraying lower portions of the bush but also for providing a barrier to spray that might otherwise fall onto the soil. Such a lowermost horizontally extending unit may be used in many arrays embodying the invention, to control the downward extent of spraying. Such a unit may have only one air knife, beneath the array of nozzles.

In another aspect the invention provides a method of spraying a target comprising arranging a plurality of spraying units as described above so as to relate to the contour of the target; and spraying the target therewith.

Some embodiments of the invention will now be described in more detail with reference to the accompanying drawings in which:-
Fig. 1 is a plan view of a spraying unit embodying the invention;
Fig. 2 is a like view showing part of a modification;
Fig. 3A and 3B are views in elevation and plan of an embodiment of the invention in use for spraying an arable crop;
Fig. 4 is an elevation of an embodiment of the invention in use for spraying fruit bushes;
Fig. 5 is an elevation of an embodiment of the invention in use for spraying fruit trees;
Fig. 6A and 6B are side and end elevations of a spray assembly with only one
Fig. 7 is a diagrammatic layout of a complete spraying assembly.

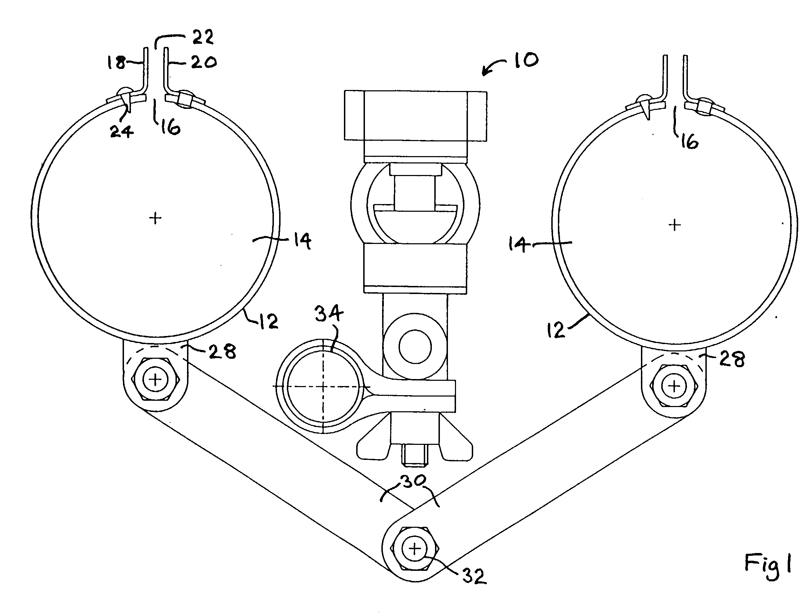

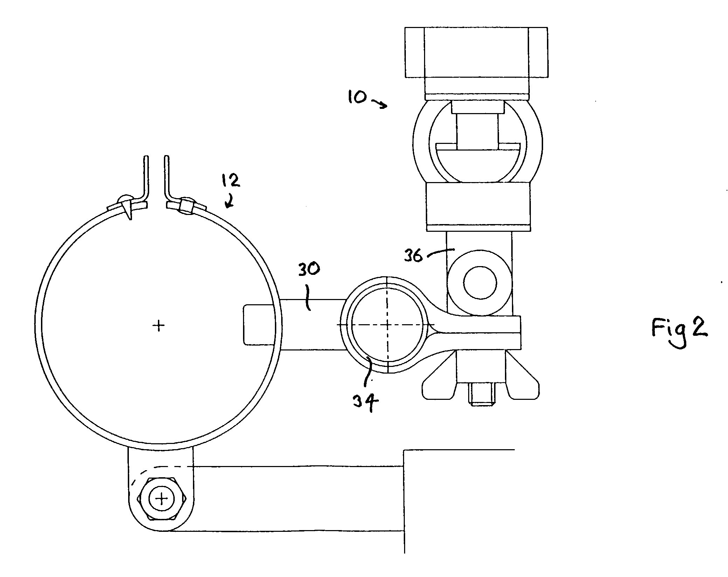

Fig. 1 shows a spraying unit having an array of hydraulic spraying nozzles 10 mounted in a row between two air knives 12. Each air knife consists of an elongate tubular chamber 14 of uniform cross-section (round in this example), having an opening 16 extending for all, or much of, its length. A pair of flanges 18,20 extend along the sides of the opening 16 and define a mouth 22. Preferably at least one of the flanges 20 is mounted (24) so as to be displaceable or replaceable, so that the nature of the air outlet 22 can be varied. At one end, the chamber 14 is coupled to a flexible air input tube. The other end will generally be closed (though in some circumstances, a plurality of knives 12 could be connected in series). The knife body 14 has one or more mounting flanges 28 coupled through an arm 30 to a common support 32. The knives 12 may be pivotable, at one or both ends of the arms 30. The nozzles 10 are mounted between the knives 12, on a nozzle mounting tube 34 that extends parallel to the axes of the knife tubes 14. As shown in Fig. 2, the knives 12 and nozzles 10 may be coupled together via respective arms 30,36 to form a compact portable unit. The nozzles 10 may be pivotable on the mounting tube 34.

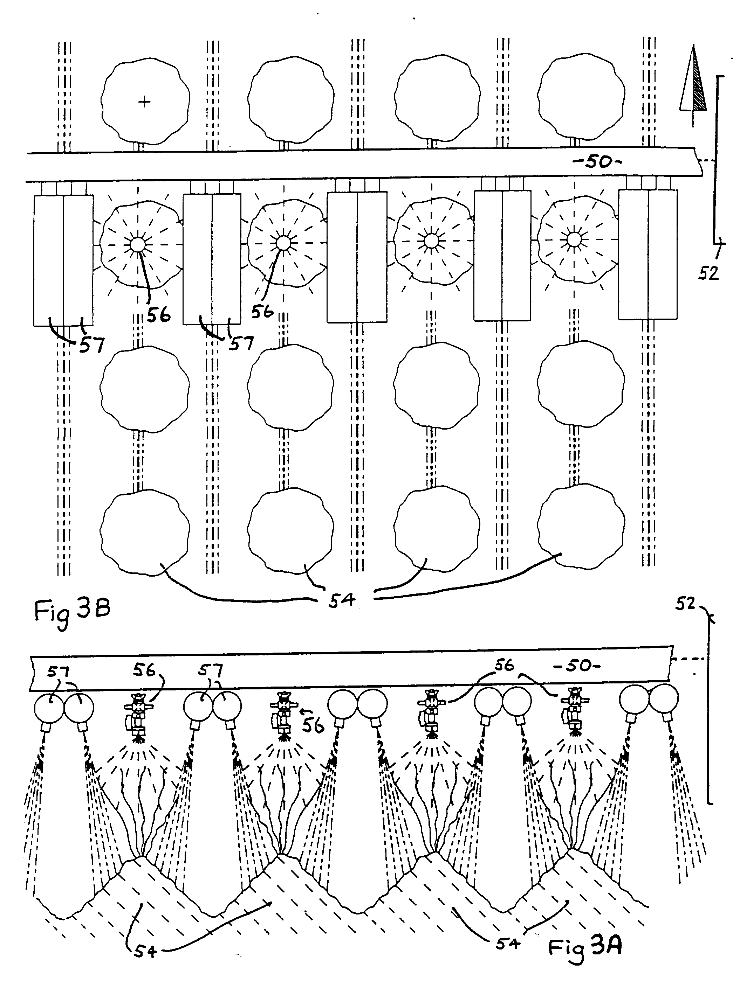

Figs. 3A and 3B show a crop spraying assembly having a manifold arm 50 that may be coupled to a vehicle, indicated schematically at 52. As shown, the arm 50 extends over four rows 54 of crops. Over the intended location of each row 54, there is a respective hydraulic spray nozzle 56. Each nozzle points downwardly, and is flanked by a pair of air knives 57. Each is mounted horizontally. That is to say, the elongate chambers 14 of the knives, extend horizontally. The units are quite short. As shown in Fig. 3A, they are angled to produce air curtains that pass generally downwardly, but converge on the spray. The curtains also flank the crop plants of the respective rows, containing the spray in the desired treatment area.

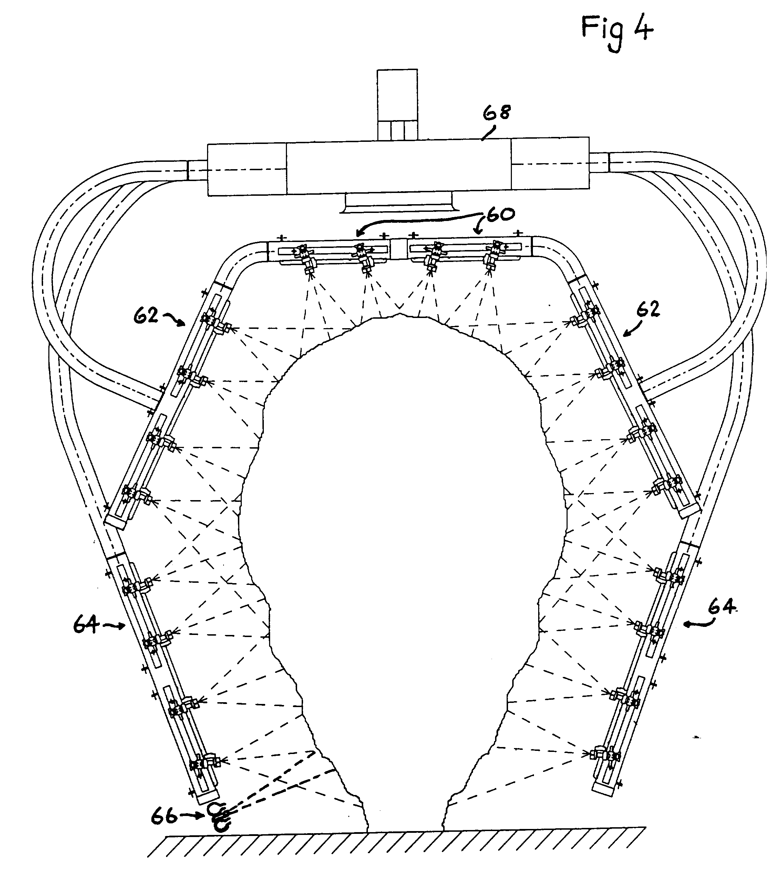

Fig. 4 shows an assembly for treating a fruit bush (which will generally be in a row thereof). The contour of the bush is rounded, rather balloon-shaped, with a relatively flat upper region and a tapering lower region which is overhung by the region of greatest lateral extent. As shown, to mimic this contour, an array of three units has been used at each side, all in the same vertical plane. Thus at each side there is a horizontally-extending top unit 60. An intermediate unit 62 extends downwardly and outwardly from near the end of the top unit 60. A lower unit 64 extends downwardly and slightly inwardly from near the end of the intermediate unit 62. In addition to these units in the vertical plane, there may be a bottom unit 66 (as shown schematically on one side), which extends horizontally and directs its output towards the bush generally horizontally, possibly with a slight upward component as shown. An array as shown in Fig. 4 may be carried by a vehicle designed to straddle a row of bushes.

A fan unit 68 for providing air to the air knives may be provided at the top, centred relative to the two lateral arrays of units. As shown it is slightly spaced above the top units 60, and draws in air from slightly above them.

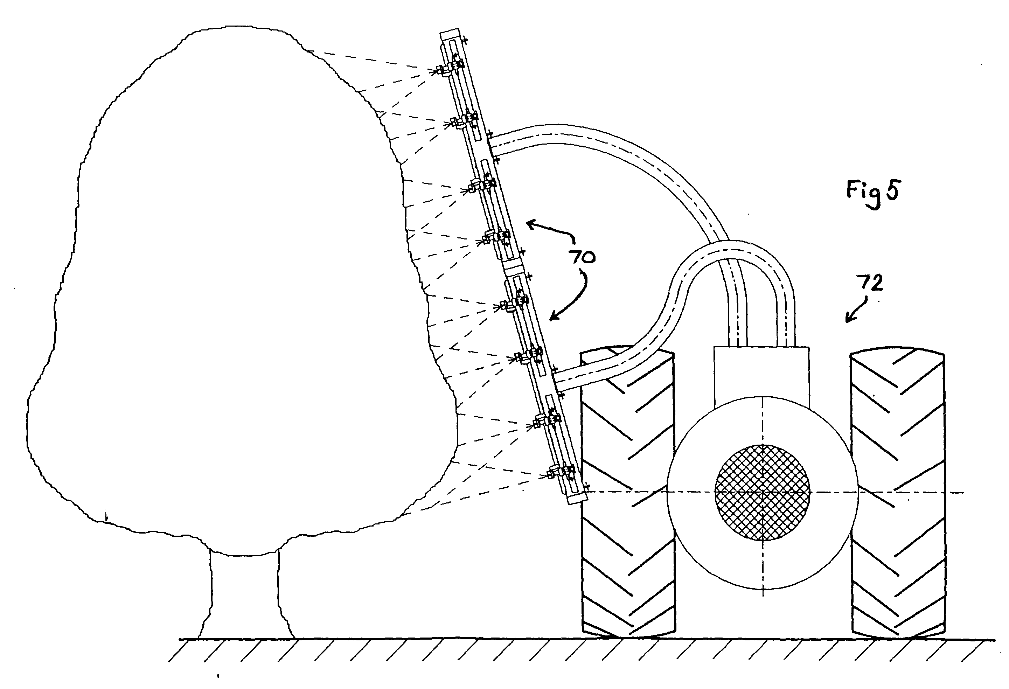

Fig. 5 shows an arrangement for use with fruit trees grown in the modern "Christmas tree like" form. That is to say, the contour is substantially conical. Thus it is sufficient to have a linear array of units. This is shown as being provided by two standard units 70. The array is shown as being carried by a tractor 72 which drives alongside the row of trees.

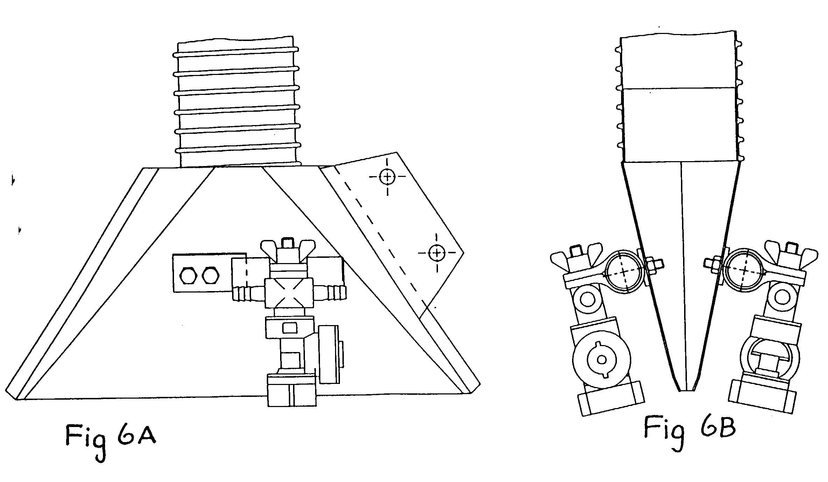

Fig. 6A and B show a simple, cheap spraying unit which uses the principle of the invention. A single air knife is provided by a flattened nozzle 100 having a narrow outlet slit 102. A liquid spray nozzle 104 is mounted at one side, close to the slit. Its axis is slightly tilted relative to the axis of the knife 100 as seen in end elevation, so that they intersect about 300mm from the nozzle. As shown, there may be a pair of nozzles 104, one on each side of the air knife 100.

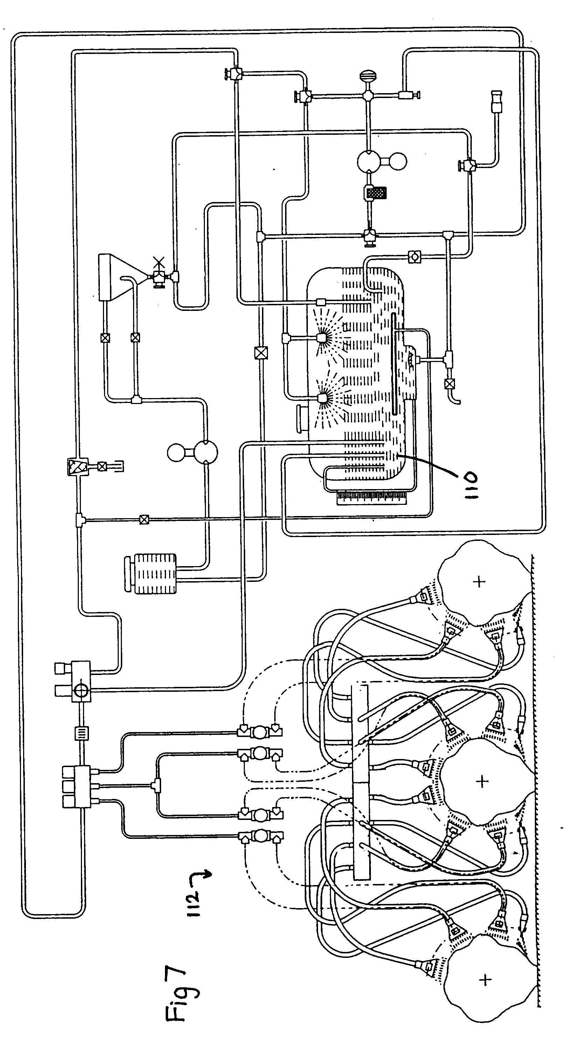

Fig. 7 shows a complete spraying assembly including a reservoir tank 110 for liquid to be sprayed, and a tractor-mounted array of fans and spraying units 112. The spraying units are shown as the simplified type of Fig. 6, but could be the more sophisticated twin-knife type.

## Claims

1. Spraying apparatus having at least one air knife(12), adapted to produce a curtain of air, and at least one liquid nozzle(10), adapted to produce a liquid spray, wherein the nozzle(10) is disposed relative to the air knife(12) so that the spray is conveyed and controlled by the air curtain.

2. Apparatus according to claim 1 wherein the or each said nozzle (10) is a hydraulic spray nozzle.

3. Apparatus according to claim 1 or 2 wherein the at least one liquid nozzle(1) is adjacent a said air knife(12), and said nozzle and air knife have their axes at slight angles, so that the liquid spray tends to collide with the air curtain and be carried with it.

4. Apparatus according to claim 3 wherein said nozzle(10) and air knife(12) are disposed so that said collision occurs 200-400mm from the liquid spray nozzle (10).

5. Apparatus according to any preceding claim which comprises at least one spraying unit having a plurality of said nozzles(10) arranged in a line, and a pair of said air knives (12) located adjacent the nozzles, one on each side of the line.

6. Apparatus according to claim 5 wherein each air knife (12) is of length 40-60cm.

7. An apparatus for spraying a row crop of small height comprising a manifold arm(50) for extending horizontally across a plurality of rows and, above each intended row location, a pair of spraying units as defined in claim 5 or 6, each mounted horizontally, transversely to the arm, so as to extend in parallel with the row direction; the units of a pair being spaced apart and oriented so that their sprays commence on respective sides of a row centre and extend downwardly and slightly inwardly, to target the particular row.

8. An apparatus for spraying a row crop of small height comprising a manifold arm(50) for extending horizontally across a plurality of rows; a respective line of nozzles(56) located centrally over each intended row centre; and a respective pair of knives(57) flanking each line of nozzles(56) for producing a pair of blankets for targeting the spray from the associated line of nozzles on the intended row.

9. An apparatus according to claim 7 or 8 wherein the positions and angles of the units on the manifold arm(50) are variable.

10. An apparatus for spraying a bush fruit crop comprising a lateral array of spraying units as defined in claim 5 arranged for spraying one side of a bush, said array of units being arranged in a vertically-extending plane and oriented to correspond to the outline of the bush, there being an upper unit(62) which extends downwardly and outwardly, and a lower unit(64) which extends downwardly and inwardly.

11. Apparatus according to claim 10 having an opposed pair of lateral arrays of spraying units(62,64) arranged in the same vertically-extending plane for spraying both sides of a bush, and a top unit(60) extending horizontally over the bush in said plane.

12. An apparatus according according to claim 10 or 11 wherein the or each lateral array has, at the bottom, an air knife(66) arranged with its axis horizontal, out of the plane of the upper and lower units.

13. A method of spraying a target comprising arranging a plurality of spraying apparatuses according to any of claims 1-6 or an apparatus according to any of claims 7-12 so as to relate to the contour of the target; and spraying the target therewith.
